# EUROPÄISCHE PATENTSCHRIFT

(11) **EP 0 676 683 B1**
(45) Veröffentlichungstag und Bekanntmachung des Hinweises auf die Patenterteilung: **12.08.1998**
(21) Anmeldenummer: 95104897.4
(22) Anmeldetag: 01.04.1995
(51) Int. Cl.: G05D 23/275, F24D 19/10

(54) **Programmsteuerung für ein Thermostatventil oder eine Heizungssteuerung**
Program control for a thermostatic valve or a heating control
Commande programmé pour une vanne thermostatique ou une commande de chauffage

(30) Priorität: 09.04.1994 DE 4412226
(43) Veröffentlichungstag der Anmeldung: 11.10.1995
(73) Patentinhaber: Ziegler, Horst Prof. Dr.Dipl.-Phys., 33100 Paderborn (DE)
(72) Erfinder: Ziegler, Horst Prof. Dr.Dipl.-Phys., 33100 Paderborn (DE)
(74) Vertreter: Matschkur, Lindner Blaumeier Patent- und Rechtsanwälte

(56) Entgegenhaltungen:
- EP-A- 0 207 295
- EP-A- 0 306 235
- EP-A- 0 457 486
- WO-A-88/04447
- DE-A- 3 100 838
- DE-C- 3 509 353
- US-A- 4 696 428

## Beschreibung

Die Erfindung betrifft eine Programmsteuerung für ein Thermostatventil oder eine Heizungssteuerung gemäß dem Oberbegriff des Anspruches 1.

Derartige Programmsteuerungen sind in Form von an das Ventilgehäuse integrierten Steuerungsköpfen bekannt, wobei mehrere kleine Tasten in Verbindung mit einer LCD-Anzeigeeinheit zur Eingabe der zu verschiedenen Zeiten zu verwendenden Temperatur-Sollwerte dienen. Das Bedienen dieser kleinen Tasten und das Ablesen der Anzeige an den tief angebrachten Heizkörperventilen ist aber sehr umständlich und für nicht geübte Benutzer schwierig, insbesondere nachdem die Programmierung nur selten in sehr großen zeitlichen Abständen anfällt.

Durch die vorliegende Erfindung soll daher eine Programmsteuerung für ein Thermostatventil oder eine Heizungssteuerung gemäß dem Oberbegriff des Anspruches 1 so weitergebildet werden, daß eine einfache Programmierung unter Verwendung einer Eingabeeinrichtung möglich ist, die dem Einstellrad eines normalen Thermostaten entspricht.

Diese Aufgabe ist erfindungsgemäß gelöst durch eine Programmsteuerung mit den im Anspruch 1 angegebenen Merkmalen.

Bei der erfindungsgemäßen Programmsteuerung hat das Eingabeelement der Eingabeeinrichtung eine ausgewählte Stellung, in welcher das Ausgangssignal des zugeordneten Stellungsgebers von einem an diesen angeschlossenen Rechner der Programmsteuerung nicht als Temperatur-Sollwertsignal sondern als Modus-Steuerbefehl verstanden wird, durch welchen diesen Rechner veranlaßt wird, früher in dem Sollwertspeicher abgelegte Temperatur-Sollwertsignale gemäß der Abfolge der vom Taktgeber bereitgestellten Taktimpulse sukzessive abzurufen. Bei anderen Stellungen des Einstellelementes stellt der Rechner fest, daß keine Modus-Steuersignal für automatischen Betrieb vorliegt und arbeitet dann im Lernmodus oder Einlesemodus, das heißt er interpretiert die Ausgangssignale des Stellungsgebers als Temperatur-Sollwertsignale und speichert diese in Abhängigkeit von den vom Taktgeber abgegebenen Taktimpulsen im Sollwertspeicher ab und stellt sie gleichzeitig als momentan zu verwertende Sollwert-Temperatursignale bereit.

Auf diese Weise ist es möglich, die Programmierung des Sollwertspeichers unter Verwendung eines einzigen Einstellelementes vorzunehmen, dessen Funktionsweise selbstevident ist und keiner detaillierten Beschreibung bedarf.

Vorteilhafte Weiterbildungen der Erfindung sind in Unteransprüchen angegeben.

Wählt man die Arbeitsfrequenz des Taktgebers gemäß Anspruch 2 so hat man zum einen eine für die Praxis noch gut ausreichende zeitliche Auflösung der Programmsteuerung, zum anderen ist der Speicherbedarf pro zu steuerndem Tag verhältnismäßig klein, so daß sich auch Sollwert-speicher mit einem vollständigen Wochenprogramm unter Verwendung insgesamt kleiner handelsüblicher Schreib-/ Lesespeicher realisieren lassen.

Die Weiterbildung der Erfindung gemäß Anspruch 3 ist im Hinblick auf ein rasches, nicht in Echtzeit erfolgendes Programmieren des Sollwertspeichers von Vorteil.

Bei einer Programmsteuerung gemäß Anspruch 4 kann man die durch die Taktimpulse des Taktgebers vorgegebene lokale "Zeit" zum Programmieren sowohl vorwärts als auch rückwärts laufen lassen. Damit läßt sich zum einen die Programmierung rasch durchführen; zum anderen kann man die lokale Zeit einfach auf die Echtzeit einstellen (z. B. beim Übergang zwischen Sommer- und Winterzeit.

Dieses Bewegen der lokalen Zeit in beiden Richtungen läßt sich gemäß Anspruch 5 besonders einfach realisieren.

Bei einer Programmsteuerung gemäß Anspruch 6 erhält man eine Umsetzung der intern als lokale Zeit verwenden Zählerstände in übliche Zeitangaben ohne daß die Programmsteuerung einen echten Uhrenchip zu enthalten bräuchte.

Bei einer Programmsteuerung gemäß Anspruch 7 läßt sich die jeweils für das Thermostatventil vorgegebene Solltemperatur vom Benutzer ablesen, obwohl das Eingabeelement konstant in einer keiner Temperatur zugeordneten Stellung steht, nämlich der "Automatik"-Stellung.

Die Weiterbildung der Erfindung gemäß Anspruch 8 gestattet ein sicheres Umstellen der Programmsteuerung in einen gewünschten Arbeitsmodus unter taktiler Rückmeldung des Erreichens der gewünschten Stellung des Eingabeelementes.

Gemäß Anspruch 9 ist das Umstellen der Programmsteuerung in eine Sonderfunktion (z.B. "Frostschutz" oder "Kopieren") auch dann gewährleistet, wenn das Eingabeelement nicht exakt in die dem Sonderfunktions-Steuerbefehl zugeordnete Stellung bewegt worden ist. Man kann auf diese Weise auch nicht Endlagen zugeordnete Sonderfunktionen der Steuerung anwählen, ohne daß es auf eine exakte Einstellung des Eingabeelementes auf genau eine vorgegebene Stellung ankäme.

Bei einer Programmsteuerung gemäß Anspruch 10 kann man auch die zweite mechanische Endstellung des Stellungsgebers dazu verwenden, der Programmsteuerung einen besonders wichtigen Befehl zu übermitteln.

Gemäß Anspruch 11 entspricht dieser zweiten Endlage des Stellungsgebers ein Kopierbefehl, welcher den Rechner veranlaßt, ein dem gerade betrachteten Tag betrachtetes Speicherzellenfeld des Sollwertspeichers in das entsprechende Speicherfeld für den nächsten Tag zu kopieren. Dies erleichtert die Programmierung der Programm-Steuerung erheblich, da die Temperatursollwerte für aufeinanderfolgende Werktage in der Regel gleich sind.

Bei einer Programmsteuerung gemäß Anspruch 12 kann man die Skala der Eingabeeinrichtung nicht linear wählen, insbesondere außerhalb des normalerweise abzudeckenden Temperaturbereiches, in welchem eine größere Auflösung gefordert wird, eine demgegenüber weit abgesenkte nur zur Frostsicherung dienende Temperatur vorgeben, ohne daß man die Skala entsprechend zu verlängern bräuchte.

Nachstehend wird die Erfindung anhand von Ausführungsbeispielen unter Bezugnahme auf die Zeichnung näher erläutert. In dieser zeigen:
- Figur 1:: eine Aufsicht auf die Stirnseite eines programmierbaren Heizkörper-Thermostatventiles;
- Figur 2:: ein Blockschaltbild des Thermostatventiles nach Figur 1;
- Figur 3:: eine Aufsicht auf ein abgewandeltes programmierbares Heizkörper-Thermostatventil;
- Figur 4:: ein Blockschaltbild des Thermostatventiles nach Figur 3;
- Figur 5:: ein Blockschaltbild einer Steuerschaltung, die Teil des Blockschaltbildes nach Figur 4 ist; und
- Figur 6:: das Schaltbild eines Ringzählers, wie er in der Steuerschaltung nach Figur 5 verwendet wird.

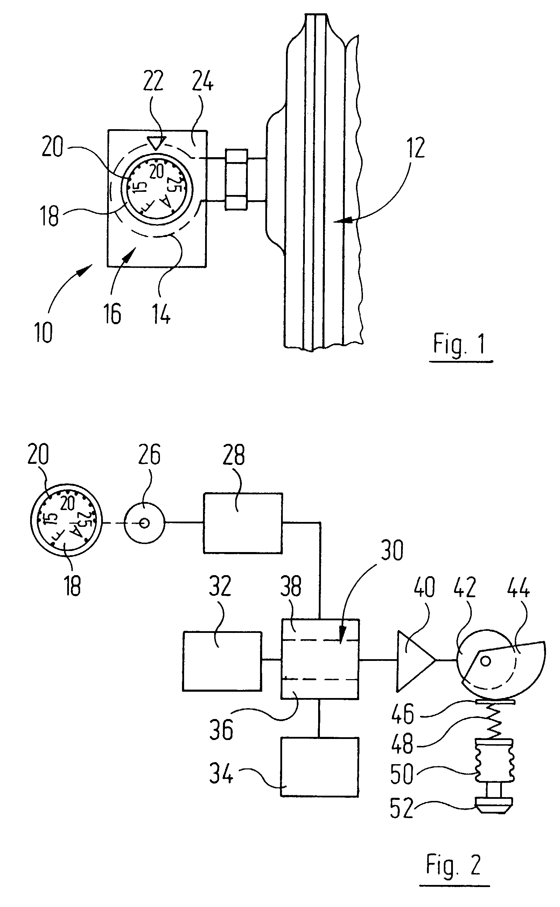

In Figur 1 ist ein programmierbares Heizkörper-Thermostatventil insgesamt mit 10 bezeichnet. Es ist als Eckventil ausgebildet und an den Einlaß eines Heizkörpers 12 angeschlossen.

Das programmierbare Thermostatventil 10 besteht aus einem üblichen Dehnstoffventil 14 und einem auf dessen Ventilteller arbeitenden Steuerkopf 16, der den üblichen, eine Nockenfläche aufweisenden Temperatur-Einstellknopf ersetzt.

Der Steuerkopf 16 hat ein Temperatur-Wählrad 18, welches beim gezeigten Ausführungsbeispiel mit einer von 15°C ist 25°C reichenden Temperaturskala 20 versehen ist, die bezüglich einer Markierung 22 einzustellen ist, die auf einem Gehäuse 24 des Steuerkopfes 16 vorgesehen ist. Das Temperatur-Wählrad 18 kann auch als verrchiebbares Element eingerichtet sein. Die Temperaturskala 20 erstreckt sich beim gezeigten Ausführungsbeispiel unter gleicher Winkelteilung über 180°.

In der Praxis ist die Temperaturskala 20 vorzugsweise auf der Mantelfläche des dicker ausgebildeten Wählrades 18 (wiederum vorzugsweise: zusätzlich) vorgesehen.

Das Wählrad 18, das in beiden Drehrichtungen einen mechanischen Endanschlag hat, ist bei diesen Endlagen mit zwei zusätzlichen Marken "A" für Automatikbetrieb und "F" für Frostsicherung versehen.

Wie aus Figur 2 ersichtlich, ist das Wählrad 18 mechanisch mit einem Drehmelder 26 verbunden, der z. B. ein eingängiges Potentiometer ist, durch welches auch die Endlagen des Wählrades 18 vorgegeben sind.

Der Ausgang des als Potentiometer ausgebildeten Drehmelders 26 ist über einen Analog-/Digitalwandler 28 mit einem Eingang einer Steuerschaltung 30 verbunden, deren Arbeitsweise nachstehend noch genauer beschrieben wird.

Ein weiterer Eingang der Steuerschaltung 30 ist mit einem Sollwertspeicher 32 verbunden, und von einem langsam laufenden Taktgeber 34 erhält die Steuerschaltung 30 Taktimpulse, die auf einen in der Steuerschaltung 30 vorgesehenen Ringzähler 36 gegeben werden. Ferner gehört zu der Steuerschaltung 30 ein Modus-Steuerkreis bzw. Befehls-Decoder 38.

Der Befehls-Decoder 38 vergleicht das Ausgangssignal des A/D-Wandlers laufend mit derjenigen Binärzahl, die bei Stellung des Wählrades 18 in der Stellung "A" (oder in vorgegebener Nachbarschaft desselben) erhalten wird. Ist dies der Fall, so gibt der Befehls-Decoder 38 ein Modussteuersignal "Automatik" ab, und die Steuerschaltung 30 arbeitet so, daß sie aus dem Sollwertspeicher 32 laufend die dort abgespeicherten Temperatur-Sollwertsignale ausliest, wobei die Adressierung des Sollwertspeichers 32 gemäß dem Stand des Ringzählers 36 erfolgt. Diese Temperatur-Sollwertsignale werden über einen Motor-Steuerkreis 40 in Drehbewegungen eines reversierbaren Elektromotors 42 umgesetzt, dessen Welle eine spiralförmige Nockenscheibe 44 trägt, deren Kante mit einem Stellglied 46 des Dehnstoffventiles 14 zusammenarbeitet, von welchem in Figur 2 schematisch noch eine Vorspannfeder 48, ein Dehnstoffelement 50 sowie ein Ventilkegel 52 wiedergegeben sind.

Stellt der Befehls-Decoder 38 fest, daß das Wählrad 18 nicht in der Stellung "A" steht, so arbeitet die Steuerschaltung 30 so, daß sie die Ausgangssignale des A/D-Wandlers 28, die der am Wählrad 18 jeweils eingestellten Temperatur entsprechen, laufend in den Sollwertspeicher 32 abspeichert, wobei die Adressierung wieder gemäß dem Stand des Ringzählers 36 erfolgt. Diese abgespeicherten Temperatur-Sollwertsignale dienen zugleich zur laufenden Ansteuerung des Motorsteuerkreises 40.

Die Programmierung des programmierbaren Thermostatventiles 10 erfolgt somit einfach dadurch, daß man innerhalb der Ringperiode des Ringzählers 36 das Wählrad 18 in Echtzeit jeweils so stellt, wie man für diese Tageszeit die Raumtemperatur einstellen will. Ist die Periode des Ringzählers 36 z. B. ein Tag, so muß der Benutzer nur innerhalb eines Tages das Wählrad 18 an ausgewählten Zeitpunkten so stellen, wie er die Temperaturverhältnisse im Raum von da an wünscht. Anschließend stellt er das Wählrad 18 auf die Stellung "A" und von da ab ruft die Steuerschaltung 30 die abgespeicherten Temperatur-Sollwertsignale laufend ab, so daß man für jeden Tag den gleichen Verlauf der Temperaturregelung erhält.

Da ein 24 Stunden- Ringzähler verwendet wird, kommt es offensichtlich auf eine Synchronisierung dieses Zählers auf die echte Uhrzeit nicht an.

Ist die Periode des Ringzählers 36 eine Woche, so kann der Benutzer für die verschiedenen Wochentage unterschiedliche Temperaturprogramme analog eingeben, wie oben stehend für eine Ringperiode von einem Tag beschrieben.

Auch hier ist keine Synchronisierung auf die Uhrzeit notwendig.

Stellt der Befehls-Decoder 38 fest, daß am Ausgang des A/D-Wandlers 28 eine Binärzahl erhalten wird, wie sie der Stellung des Wählrades "F" entspricht, so veranlaßt die Steuerschaltung 30 die Abgabe eines Temperatur-Sollwertsignales, welches eines für Frostsicherungszwecke ausreichenden Raumtemperatur entspricht, z. B. 4°C. In diesem Modus wird der Sollwert-Speicher 32 unverändert erhalten, also nicht überschrieben.

Im einzelnen arbeitet die Steuerschaltung darüber hinaus so, daß sie prüft, ob innerhalb einer vorgegebenen Zeitspanne nach Einstellen der Stellung "F" des Wählrades 18 das Wählrad nochmals gedreht wird. Ist dies der Fall, und wird anschließend das Wählrad 18 auf eine Temperatur zwischen 15°C und 25°C gestellt, so wird für eine vorgegebene Zeitspanne von beispielsweise 2 Stunden dieser Temperaturewert anstelle des Frostschutz-Temperaturwertes von der Steuerschaltung 30 als Temperatur-Sollwertsignal abgegeben, ganz gleich, in welcher anderen Stellung das Wählrad 18 dann steht. Wird somit das Wählrad 18 nach Einstellen auf diese im normalen Bereich liegende Temperatur auf die Stellung "A" gestellt, so läuft die Programmsteuerung nach Ablauf der 2 Stunden-Frist wieder normal im Automatikbetrieb ab. Mann kann auf diese Weise z. B. eine für einen bestimmten Tag nicht gewünschte Nachtabsenkung außer Funktion setzen oder vorübergehend eine höhere Raumtemperatur einstellen, ohne daß der Inhalt des Sollwertspeichers 32 modifiziert wird, da das Stellen des Wählrades 18 in Stellung "F" den Programmier- oder Einlesemodus für mindestens die vorgegebene Zeitspanne (im Beispiel: 2 Stunden) blockiert.

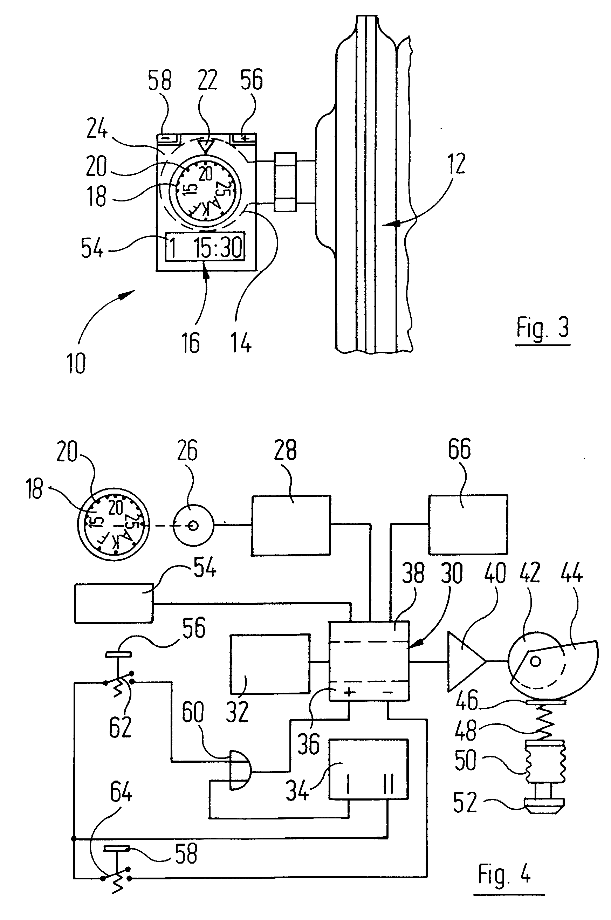

Bei dem abgewandelten programmierbaren Thermostatventil 10 gemäß Figur 3 trägt die Frontseite des Gehäuses 24 zusätzlich eine LCD-Anzeige 54, und bei den Seiten der oberen Gehäusewand sind zwei Taster 56, 58 vorgesehen, welche die Markierung "+" bzw. "-" tragen.

Wie aus Figur 4 ersichtlich, hat der Taktgeber 34 nun zwei Ausgänge, wovon der eine Ausgang (I) Taktimpulse mit gleicher Frequenz bereitstellt, wie beim Ausführungsbeispiel nach Figur 1, wobei der Abstand aufeinanderfolgender Taktimpulse typischerweise zwischen 5 und 15 Minuten beträgt, was für die Programmsteuerung von Thermostatventilen eine ausreichende zeitliche Auflösung darstellt. Der Ausgang I des Taktgebers 34 ist über ein ODER-Glied 60 mit einem ersten Eingang der Steuerschaltung 30 verbunden, deren Ringzähler 36 nun als Auf-/Ab-Zähler ausgebildet. Ein zweiter Eingang des ODER-Gliedes 60 ist über einen Schalter 62, der mechanisch mit dem Taster 56 gekoppelt ist, mit einem zweiten Ausgang (II) des Taktgebers 34 verbunden, der zweite Taktimpulse mit verglichen mit den ersten Taktimpulsen hoher Frequenz bereitstellt, z. B. im Sekundenabstand.

Ein zweiter Eingang der Steuerschaltung 30, der mit der Abwärtszählklemme des Ringzählers 36 verbunden ist, erhält die am Ausgang II des Taktgebers 34 bereitgestellten höherfrequenten zweiten Taktimpulse über einen Schalter 64, der mechanisch mit dem Taster 58 gekoppelt ist. Auf diese Weise kann man die lokale Zeit der Programmsteuerung rasch in beiden Richtungen bewegen, wie dies zum Programmieren von Temperatur-Sollwertprofilen erwünscht ist.

Ferner ist an die Steuerschaltung 30 ein Festwertspeicher 66 angeschlossen, welcher für die verschiedenen Zählerstände des Ringzählers 36 die entsprechenden Klartext-Zeitangaben enthält. So ist z. B. in der Speicherzelle Nr. 1 des Festwertspeichers 66 die Zeichenkette "00:15", in der Speicherzelle Nr. 2 des Festwertspeichers 66 die Zeichenkette "00:30" usw. abgelegt, wenn der Abstand der ersten Taktimpulse 15 Minuten beträgt. Durch Adressierung des Festwertspeichers 66 unter Verwendung des Standes des Ringzählers 36 erhält man somit dem Ringzählerstand zugeordnete Klartext-Zeitangaben, und diese werden von der Steuerschaltung 30 im Einlesemodus auf die Anzeige 54 ausgegeben. Es versteht sich, daß der Festwertspeicher 66 genauso viele Speicherzellen aufweisen muß, wie unterschiedliche Zählerstände am Ringzähler 36 erhalten werden, wobei bei einem Wochen-Ringzähler die verschiedenen Wochentage entweder in Form einer Ziffer (wie in Figur 3 dargestellt) angegeben werden können oder in Buchstaben-Ketten umgesetzt sein können.

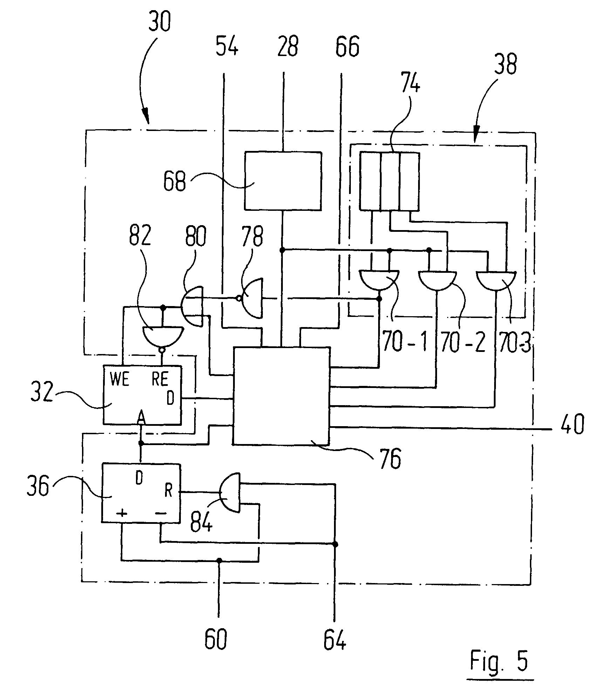

Figur 5 zeigt einige Einzelheiten aus der Steuerschaltung 30.

An den Ausgang des A/D-Wandlers 28 ist ein Umsetzkreis 68 angeschlossen, der z. B. einfach durch das Ausgangssignal des A/D-Wandlers adressiert wird und in seinen verschiednen Speicherzellen Temperatursignale enthält, welche den verschiedenen Winkelstellungen des Wählrades 18 entsprechen sollen. Auf diese Weise ist es möglich, die Temperaturskala 20 auch nicht linear zu wählen, im einfachsten Falle unterhalb der Temperatur von 15°C noch eine Temperatur von 10°C vorzusehen oder oberhalb des normalen Temperaturbereiches noch eine höhere Temperatur einstellen zu können (z. B. für Badezimmer oder Ankleideräume).

Der Ausgang des Umsetzkreises 68 ist an die einen Eingänge dreier UND-Glieder 70-1, 70-2, 70-3 angeschlossen, deren zweite Eingänge mit drei Speicherzellen eines Befehlsspeichers 74 verbunden ist, welche diejenigen Ausgangssignale des Umsetzkreises 68 enthalten, die erhalten werden, wenn das Wählrad 18 in der Stellung "A", "F" und einer weiteren Stellung "K" stehen. Letztere bildet beim hier betrachteten Ausführungsbeispiel die linke Endstellung des Wählrades 18.

Anstelle der UND-Glieder 70 kann man auch durchgehend oder nur teilweise Komparatoren verwenden, die ein Ausgangssignal bereitstellen, wenn sich die beiden Eingangssignale um weniger als einen vorgegebenen Betrag unterscheiden. Es ist dann nicht notwendig das Wählrad hochgenau auf eine der Stellungen "A", "F" und "K" einzustellen, um die gewünschte Sonderfunktion zu aktivieren.

Das Ausgangssignal der UND-Glieder 70 werden jeweils auf einen Eingang eines Rechenkreises 76 gegeben und steuert desses Arbeitsverhalten. Da sich die Wählradstellungen "A", "F" und "K" winkelmäßig unterscheiden , ist schon hierdurch gewährleistet, daß nicht mehrere Ausgangssignale der UND-Glieder 70-1, 70-2, 70-3 gleichzeitig vorliegen können.

Das Ausgangssignals des UND-Gliedes 70-1 wird ferner über einen Inverter 78 und ein ODER-Glied 80 auf die Schreibsteuerklemme WE des Sollwertspeichers 32 gegeben, dessen Datenklemme D mit dem Rechenkreis 76 verbunden ist. Der Ausgang des ODER-Gliedes 80 ist ferner über einen Inverter 82 mit der Lesesteurklemme RE des Sollwertspeichers 32 verbunden.

Ein zweiter Eingang des ODER-Gliedes 80 ist mit einem Ausgang des Rechenkreises 76 verbunden, sodaß dieser in der noch zu beschreibenden Sonderfunktion "K" ebenfalls die Schreib-/Lesesteuerung des Sollwertspeichers 32 bewerkstelligen kann.

Die Adressklemmen A des Sollwertspeichers 32 sind mit der Datenausgangsklemme D des Ringzählers 36 verbunden, dessen Aufwärtszählklemme "+" mit dem Ausgangs des ODER-Gliedes 60 und dessen Abwärtszählklemme "-" mit dem Ausgang des Schalters 64 verbunden ist. Diese beiden Eingangssignale der Steuerschaltung 30 werden ferner über ein UND-Glied 84 zusammengefaßt, dessen Ausgang mit der Rückstellklemme R des Ringzählers 36 verbunden ist.

Die Datenklemmen D des Ringzählers 36 sind ferner mit dem Rechenkreis 76 bidirektional verbunden, so daß dieser den Zählerstand nicht nur erhält sondern auch modifizieren (vorsetzen) kann.

Der Rechenkreis 76 arbeitet im wesentlichen als Schalter mit mehreren Schaltebenen, wobei er dann, wenn am Ausgang des UND-Gliedes 70-1 ein Signal anliegt, was anzeigt, daß der Arbeitsmodus "Automatik" am Wählrad 18 eingestellt ist, die Datenausgangsklemmen D des Sollwertspeichers 32 mit dem zum Motorsteuerkreis 40 führenden Ausgang verbindet, das Ausgangssignal des Sollwertspeichers 32 zur Adressierung des Festwertspeichers 66 verwendet, im welchen Temperaturanzeige-Zeichenketten zusätzlich in weiteren Speicherfeldern abgelegt sind, und die von dort ausgelesene Zeichenkette auf die Anzeige 54 gibt. Unter diesen Bedingungen erhält man wegen des Inverters 78 ein Sperren der Schreibfunktion und ein Aktivieren der Lesefunktion des Sollwertspeichers 32.

Ist das Wählrad 18 auf im Temperatureinstellbereich der Temperaturskala 20 liegende Temperatur eingestellt, so verschwindet das Ausgangssignal des UND-Gliedes 70-1, und über den Inverter 78 wird die Schreibfunktion des Sollwertspeichers 32 aktiviert. Bei verschwindendem Ausgangssignal des UND-Gliedes 70-1 arbeitet ferner der Rechenkreis 76 so, daß er den an einem weiteren Eingang erhaltenen Zählerstand des Ringzählers 36 zum Adressieren des Festwertspeichers 66 verwendet und die hierbei erhaltene Zeit-Zeichenkette auf der Anzeige 54 ausgibt. Wird nun der Taster 56 betätigt, so läuft für die Dauer des Tastendruckes jeweils der Zählerstand des Ringzählers 36 und die Zeitanzeige in der Anzeige 54 im Sekundenabstand um jeweils ein Zeitinkrement (hier: eine Viertelstunde) weiter. Da in der bei nicht vorliegendem Ausgangssignal des UND-Gliedes 70-1 eingestellten Arbeitsweise "Einlesen" der Rechenkreis 76 ferner den Ausgang des Umsetzkreises 68 mit der Datenklemme "D" des Sollwertspeichers 32 verbindet, werden die am Wählrad 18 jeweils eingestellten Solltemperaturwerte in den Sollwertspeicher 32 eingelesen.

Offensichtlich braucht der Benutzer das Wählrad nur für diejenigen Zeitpunkte zu verstellen, bei denen eine Temperaturänderung gewünscht wird. Durch Betätigen des Tasters 58 kann die Zeit im Bedarfsfalle auch zurückgesetzt werden. Schließlich kann durch gleichzeitiges Betätigen beider Taster 56, 58 der Ringzähler 36 auf Null gestellt werden.

In der zweiten Speicherzelle des Befehlsspeichers 74 ist eine Binärzahl abgelegt, wie sie bei Stellung des Wählrades 18 in der Stellung K am Ausgang des Umsetzkreises 68 erhalten wird. Erhält der Rechenkreis 76 ein Ausgangssignal des UND-Gliedes 70-2, so kopiert er das Temperaturprofil für den gerade eingestellten Tag in den entsprechenen Speicherbereich für den folgenden Tag und erhöht den Zählerstand des Ringzählers 36 entsprechend um einen Tag. Auf diese Weise läßt sich die Programmierung identischer Temperaturprofile für aufeinanderfolgende Tage einfach durchführen.

Eine dritte Speicherzelle des Befehlsspeichers 74 enthält eine Binärzahl, wie sie bei Stellung des Wählrades 18 auf die Position "F" am Ausgang des Umsetzkreises 68 erhalten wird. Bei dieser Stellung des Wählrades erhält man somit ein Ausgangssignal am UND-Glied 70-3, welches auf einen weiteren Eingang des Rechenkreises 76 gegeben wird.

Beim Erhalt eines solchen Signales stellt der Rechenkreis 76 beim hier betrachteten Ausführungsbeispiel seinen Arbeitsmodus bleibend auf die Funktion "Regelung aus" um, in welcher er das Ausgangssignal des Umsetzkreises 68 direkt auf den mit dem Motorsteuerkreis 40 verbundenen Ausgang durchschaltet. In diesem Arbeitsmodus wird vom Rechenkreis 76 ferner jegliche Programmierung des Sollwertspeichers 32 unterbunden, und zwar so lange, bis wieder entweder ein Ausgangssignal des UND-Gliedes 70-1 oder ein Ausgangssignal des UND-Gliedes 70-2 erhalten wird. Das Wählrad 18 arbeitet während dieser Zeit genauso wie das Wählrad eines normalen Raumthermostaten. Stellt der Benutzer nach der Zeit, in welcher besondere Temperaturverhältnisse gewünscht werden, wieder auf Automatikbetrieb um, in dem er das Wählrad in die Stellung "A" bringt, so wird automatisch die Programmierbarkeit der Steuerung wiederhergestellt.

Es versteht sich, daß man in Abwandlung der oben beschriebenen Sonderfunktions-Arbeitsweise "Raumthermostat" den Rechenkreis 76, der in der Praxis ein Mikroprozessor mit zugeordnetem Programmspeicher und Arbeitsspeicher sein kann, so arbeiten lassen kann, daß er die Sonderfunktion auf eine vorgegebene Zeitspanne, z. B. 2 Stunden begrenzt, worauf dann zwangsläufig wieder in den Automatikmodus umgestellt wird. Auch in diesem Falle wird aber die Programmierbarkeit der Steuerung wie oben beschrieben so lange gesperrt, bis der Benutzer das Wählrad 18 wieder in die Stellung "A" gebracht hat.

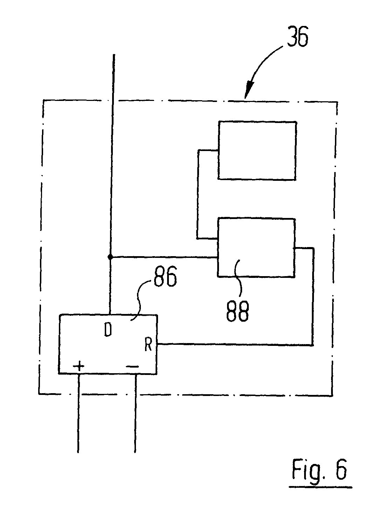

Wie aus Figur 6 ersichtlich, kann man einen Ringzähler dadurch realisieren, daß man an den Ausgang eines beliebigen Standardzählers 86 mit üblicher Stellenzahl einen das Erreichen der gewünschten Periode feststellenden Komparator 88 anschließt, dessen einer Eingang mit dem Stand des Standardzählers 86 und dessen zweiter Eingang von einem Festwertspeicher 90 her mit einer die Länge der Periode (z.B. 96 für einen Tagesringzähler mit einer Auflösung von 15 Minuten) angebenden Zahl beaufschlagt ist und dessen Ausgang mit der Rückstellklemme R des Standardzählers 86 verbunden ist.

Es versteht sich, daß man eine Programmsteuerung, wie sie oben in Verbindung mit einem Thermostatventil beschrieben wurde, auch als Teil einer Heizungssteuerung verwenden kann.

## Patentansprüche

1. Programmsteuerung für ein Thermostatventil oder eine Heizungssteuerung, mit einem Taktgeber (34), mit einer Temperatursollwert-Eingabeeinrichtung, mit einem Sollwert-speicher (32) für eine Mehrzahl von Temperatursollwertsignalen und mit einer Steuerschaltung (30), welche in Abhängigkeit von den Ausgangssignalen des Taktgebers (34) Temperatursollwertsignale aus dem Sollwertspeicher (32) abruft, dadurch gekennzeichnet, daß die Eingabeeinrichtung ein verschiebbares oder drehbares Eingabeelement (18) aufweist, welches mit einem Stellungsgeber (26) gekoppelt ist, und daß mit dem Ausgangssignal des Stellungsgebers (26) ein Decoder (38) beaufschlagt ist, welcher das Ausgangssignal des Stellungsgebers (26) mit mindestens einem vorgegebenen Befehlssignal vergleicht und seinerseits einen Rechenkreis (76) veranlaßt, bei Übereinstimmung beider Signale Temperatursollwertsignale in Abhängigkeit vom Ausgangssignal des Taktgebers (34) aus dem Sollwert-speicher (32) auszulesen, und bei Nichtübereinstimmung beider Signale das jeweils vorliegende Ausgangssignal des Stellungsgebers (26) in Abhängigkeit von den Taktimpulsen des Taktgebers (34) in dem Sollwertspeicher (32) abzulegen.

2. Programmsteuerung nach Anspruch 1, dadurch gekennzeichnet, daß der Taktgeber (34) ein niederfrequenter Taktgeber ist, der pro Stunde zwischen 2 und 12 Taktimpulse, vorzugsweise 4 Taktimpulse abgibt.

3. Programmsteuerung nach Anspruch 2, dadurch gekennzeichnet, daß der Taktgeber (34) einen zweiten Taktimpulsausgang aufweist, an welchem zweite Taktimpulse mit verglichen mit den am ersten Ausgang erhaltenen ersten Taktimpulsen großer Frequenz bereitgestellt werden, vorzugsweise mit einer Frequenz zwischen 0,5 und 2 Hz, und daß die ersten Taktimpulse direkt und die zweiten Taktimpulse über einen Schalter (62) auf die Steuerschaltung (30) gegeben werden.

4. Programmsteuerung nach Anspruch 3, dadurch gekennzeichnet, daß die zweiten Taktimpulse über einen zweiten Schalter (64) auf einen weiteren Eingang der Steuerschaltung (30) gegeben werden.

5. Programmsteuerung nach Anspruch 4, dadurch gekennzeichnet, daß die ersten Taktimpulse und die über den ersten Schalter (62) laufende zweiten Taktimpulse auf die Aufwärtszählklemme eines Auf-/Abzählers (36) und die über den zweiten Schalter (64) laufenden zweiten Taktimpulse auf die Abwärtszählklemme dieses Auf-/Abzählers (36) gegeben werden und der Zählerstand des Auf-/Abzählers (36) zur Adressierung der Speicherzellen des Sollwertspeichers (32) verwendet wird.

6. Programmsteuerung nach Anspruch 5, gekennzeichnet durch einen Festwertspeicher (66), aus welchem der Rechenkreis (76) unter Adressierung in Abhängigkeit vom Zählerstand des Auf-/Abzählers (36) dem Zählerstand entsprechende Zeitangabe-Zeichenketten abruft, und durch eine Anzeige (54), auf welche diese Zeichenketten vom Rechenkreis (76) ausgegeben werden.

7. Programmsteuerung nach Anspruch 6, dadurch gekennzeichnet, daß der Rechenkreis (76) nur im Sollwertspeicher-Einlesemodus die Zeichenketten aus dem Festwertspeicher (66) auf die Anzeige (54) gibt, während er im Sollwertspeicher-Auslesemodus die aus dem Sollwert-speicher (32) jeweils ausgelesenen Temperatur-Sollwertsignale auf die Anzeige (54) ausgibt.

8. Programmsteuerung nach einem der Ansprüche 1 bis 7, wobei der Stellungsgeber (26) mechanisch vorgegebene Endlagen hat, dadurch gekennzeichnet, daß mindestens eines der Befehlssignale demjenigen Ausgangssignal des Stellungsgebers (26) entspricht, welches in einer der mechanischen Endlagen erhalten wird.

9. Programmsteuerung nach Anspruch 8, dadurch gekennzeichnet, daß der Befehlsdecoder einen Komparator enthält, welcher ein Ausgangssignal erzeugt, wenn sich das Ausgangssignal des Stellungsgebers (26) um weniger als einen vorgebenen Betrag von einem vorgegebenen Befehlssignal unterscheidet.

10. Programmsteuerung nach Anspruch 8 oder 9, dadurch gekennzeichnet, daß der Befehlsdecoder (38) ein zweites Ausgangssignal erzeugt, wenn des Ausgangssignal des Stellungsgebers (26) einem zweiten vorgegebenen Befehlssignal entspricht.

11. Programmsteuerung nach Anspruch 10, dadurch gekennzeichnet, daß der Rechenkreis (76) bei Vorliegen des zweiten Ausgangssignales des Decoders (38) einen Speicherbereich des Sollwertspeichers (32), der den dem Stand des Auf-/Abzählers entsprechenden Tag entspricht, in den dem nachfolgenden Tag entsprechenden Speicherbereich des Sollwertspeichers (32) kopiert und den Zählerstand des Auf-/Abzählers (36) um eine einem Tag entsprechende Zahl erhöht.

12. Programmsteuerung nach einem der Ansprüche 1 bis 11, dadurch gekennzeichnet, daß das Ausgangssignal des Stellungsgebers (26) über einen Analag-Digitalwandler (28) auf die Steuerschaltung (30) gegeben wird und daß dieses digitalisierte Stellungssignal zur Adressierung eines Umsetzkreises (68) verwendet wird, in welchem verschiedenen Stellungen des Eingabeelementes (18) zugeordnete Temperatursignale abgelegt sind.

## Claims

1. Program control for a thermostatic valve or a heating control, having a clock generator (34), a temperature reference value input device, a reference value store (32) for a plurality oftemperature reference value signals, and a control circuit (30), which as a function of the output signals of the clock generator (34) requests temperature reference value signals from the reference value store (32),
characterised in that the input device has a displaceable or rotary input element (18) coupled to a position indicator (26) and in that with the output signal of the position indicator (26) a decoder (38) is acted on, which compares the output signal of the position indicator (26) with at least one predetermined command signal and in turn causes a computing circuit (76), if the two signals agree, to scan temperature reference value signals dependently on the output signal of the clock generator (34) from the reference value store (32), and if the two signals do not agree, to deposit the respectively available output signal of the position indicator (26) dependent on the clock pulses of the clock generator (34) in the reference value store (32).

2. Program control according to claim 1, characterised in that the clock generator (34) is a low-frequency clock generator, which transmits each hour between 2 and 12, preferably 4, clock pulses.

3. Program control according to claim 2, characterised in that the clock generator (34) has a second clock pulse output, to which second clock pulses having a higher frequency than the clock pulses first received at the first output are made available, preferably having a frequency of between 0.5-2 Hz, and in that the first clock pulses are generated direct and the second clock pulses are generated via a first switch (62) on to the control circuit (30).

4. Program control according to claim 3, characterised in that the second clock pulses are generated via a second switch (64) on to a further input of the control circuit (30).

5. Program control according to claim 4, characterised in that the first clock pulses and the second clock pulses running via the first switch (62) are generated on to the upward-counting terminal of an up-down counter (36), and the second clock pulses running via the second switch (64) are generated to the down-counting terminal of this up-down counter (36) and the count of the up-down counter (36) is used to address the storage location of the reference value store (32).

6. Program control according to claim 5, characterised by a fixed value store (66), from which the computing circuit (76) requests under addressing as a function of the count ofthe up-down counter (36) strings corresponding to the count, and by an indicator (54) on which these strings are transmitted by the computing circuit (76).

7. Program control according to claim 6, characterised in that the computing circuit (76) only generates the strings from the fixed value store (66) to the indicator (54) in reference value store input mode, whilst in reference value store output mode it generates to the indicator 54 the temperature reference value signals respectively output from the reference value store (32).

8. Program control according to one of claims 1 to 7, wherein the position sensor (26) has mechanically specified limits, characterised in that at least one of the command signals corresponds to that output signal of the position sensor (26) which is obtained in one of the mechanical limits.

9. Program control according to claim 8, characterised in that the command encoder contains a comparator, which generates an output signal when the output signal of the position sensor (26) differs from a predetermined command signal by less than a predetermined amount.

10. Program control according to claim 8 or 9, characterised in that the command decoder (38) generates a second output signal if the output signal of the position sensor (26) corresponds to a second specified command signal.

11. Program control according to claim 10, characterised in that the computing circuit (76), in the presence of the second output signal of the decoder (38), copies a store region of the reference value store (32) which corresponds to the day corresponding to the level of the up-down counter into the store region of the reference value store (32) corresponding to the following day and increases the count of the up-down counter (36) by a number corresponding to one day.

12. Program control according to one of claims 1 to 11, characterised in that the output signal of the position sensor (26) is transmitted to the control circuit (30) via an analogue-digital converter (30) and in that this digitalised position signal is used to address a conversion circuit (68) in which temperature signals allocated to various positions of the input element (18) are deposited.

## Revendications

1. Unité de commande programmée pour une vanne thermostatique ou une commande de chauffage, comportant un générateur de cadencement (34), un dispositif d'entrée de valeurs de consigne de température, une mémoire de valeurs de consigne (32) pour une multiplicité de signaux de valeur de consigne de température et un circuit de commande (30) qui, en fonction des signaux de sortie du générateur de cadencement (34), extrait des signaux de valeur de consigne de température de la mémoire de valeurs de consigne (32), caractérisée en ce que le dispositif d'entrée comporte un élément d'entrée translatable ou rotatif (18), qui est couplé à un capteur de positionnement (26), et en ce que le signal de sortie du capteur de positionnement (26) est appliqué à un décodeur (38) qui compare le signal de sortie du capteur de positionnement (26) à au moins un signal d'instruction prédéterminé et amène de son côté un circuit de calcul (76), en cas de coïncidence des deux signaux à lire, des signaux de valeur de consigne de température, en fonction du signal de sortie du générateur de cadencement (34), dans la mémoire de valeurs de consigne (32) et, en cas de non-coïncidence des deux signaux, à mémoriser le signal de sortie respectivement présent du capteur de positionnement (26) dans la mémoire de valeurs de consigne (32), en fonction des impulsions de cadencement du générateur de cadencement (34).

2. Unité de commande programmée selon la revendication 1, caractérisée en ce que le générateur de cadencement (34) est un générateur de cadencement à basse fréquence, qui délivre par heure entre 2 et 12 impulsions de cadencement, de préférence 4 impulsions de cadencement.

3. Unité de commande programmée selon la revendication 2, caractérisée en ce que le générateur de cadencement (34) comporte une seconde sortie d'impulsions de cadencement, sur laquelle sont mises à disposition des secondes impulsions de cadencement, à une fréquence supérieure à celle des premières impulsions de cadencement reçues sur la première sortie, de préférence à une fréquence comprise entre 0,5 et 2 Hz, et en ce que les premières impulsions de cadencement sont envoyées directement et les secondes impulsions de cadencement sont envoyées au travers d'un commutateur (62), au circuit de commande (30).

4. Unité de commande programmée selon la revendication 3, caractérisée en ce que les secondes impulsions de cadencement sont envoyées au travers d'un second commutateur (64) sur une entrée supplémentaire du circuit de commande (30).

5. Unité de commande programmée selon la revendication 4, caractérisée en ce que les premières impulsions de cadencement et les secondes impulsions de cadencement, qui transitent par le premier commutateur (62), sont envoyées sur la borne de comptage progressif d'un compteur progressif/régressif (36), et les secondes impulsions de cadencement, qui transitent par le second commutateur (64), sont envoyées sur la borne de comptage régressif de ce compteur progressif/régressif (36) et l'état de comptage du compteur progressif/régressif (36) est utilisé pour l'adressage des cellules de la mémoire de valeurs de consigne (32).

6. Unité de commande programmée selon la revendication 5, caractérisée par une mémoire morte (66), de laquelle le circuit de calcul (76) extrait des suites de caractères d'indication de temps correspondant à l'état de comptage, moyennant un adressage en fonction de l'état de comptage du compteur progressif/régressif (36), et par un dispositif d'affichage (54), sur lequel ces suites de caractères sont délivrées par le circuit de calcul (76).

7. Unité de commande programmée selon la revendication 6, caractérisée en ce que le circuit de calcul (76) envoie, uniquement dans le mode de mise en mémoire de la mémoire de valeurs de consigne, les suites de caractères provenant de la mémoire morte (66) au dispositif d'affichage (54), alors que dans le mode de lecture de la mémoire de valeurs de consigne, il délivre les signaux de valeur de consigne de température, lus respectivement dans la mémoire de valeurs de consigne (32), au dispositif d'affichage (54).

8. Unité de commande programmée selon l'une des revendications 1 à 7, dans laquelle le capteur de positionnement (26) possède des positions d'extrémité prédéterminées mécaniquement, caractérisée en ce qu'au moins l'un des signaux d'instruction correspond au signal de sortie du capteur de positionnement (26), qui est obtenu dans l'une des positions d'extrémité mécaniques.

9. Unité de commande programmée selon la revendication 8, caractérisée en ce que le décodeur d'instructions contient un comparateur, qui produit un signal de sortie lorsque le signal de sortie du capteur de positionnement (26) diffère de moins d'une valeur prédéterminée, d'un signal d'instruction prédéterminé.

10. Unité de commande programmée selon la revendication 8 ou 9, caractérisée en ce que le décodeur d'instructions (38) produit un second signal de sortie lorsque le signal de sortie du capteur de positionnement (26) correspond à un second signal d'instruction prédéterminé.

11. Unité de commande programmée selon la revendication 10, caractérisée en ce qu'en présence du second signal de sortie du décodeur (38), le circuit de calcul (76) copie une zone de la mémoire de valeurs de consigne (32), qui correspond à la journée correspondant à l'état du compteur progressif/régressif, dans la zone de la mémoire de valeurs de consigne (32), qui correspond à la journée suivante, et augmente l'état de comptage du compteur progressif/régressif (36) d'un nombre correspondant à une journée.

12. Unité de commande programmée selon l'une des revendications 1 à 11, caractérisée en ce que le signal de sortie du capteur de positionnement (26) est envoyé par l'intermédiaire d'un convertisseur analogique/numérique (28) au circuit de commande (30) et en ce que ce signal de positionnement numérisé est utilisé pour l'adressage d'un circuit de conversion (68), dans lequel sont mémorisés des signaux de température associés à des positionnements différents de l'élément d'entrée (18).
